# EUROPÄISCHE PATENTSCHRIFT

(11) **EP 2 981 446 B1**
(45) Veröffentlichungstag und Bekanntmachung des Hinweises auf die Patenterteilung: **30.05.2018**
(21) Anmeldenummer: 14714694.8
(22) Anmeldetag: 01.04.2014
(51) Int. Cl.: B62D 1/04, B60K 37/06, B60R 11/02, G06F 3/0488

(54) **BEDIENVORRICHTUNG FÜR EIN KRAFTFAHRZEUG, LENKRAD, KRAFTFAHRZEUG UND ENTSPRECHENDES VERFAHREN**
OPERATING DEVICE FOR A MOTOR VEHICLE, STEERING WHEEL, MOTOR VEHICLE AND CORRESPONDING METHOD
INTERFACE POUR VÉHICULE AUTOMOBILE, VOLANT, VÉHICULE AUTOMOBILE ET PROCÉDÉ CORRESPONDANT

(30) Priorität: 05.04.2013 DE 102013005895
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: INTINI, Onofrio, 71665 Vaihingen/Enz (DE); SCHOCH, Lars, 73630 Remshalden (DE)
(74) Vertreter: Pothmann, Karsten
(86) Internationale Anmeldenummer: PCT/EP2014/056509
(87) Internationale Veröffentlichungsnummer: WO 2014/161844

(56) Entgegenhaltungen:
- EP-A1- 0 302 193
- EP-A1- 1 958 814
- WO-A1-87/06893
- WO-A1-2011/062583
- WO-A2-2005/096131
- DE-A1-102010 012 240
- DE-A1-102011 010 229
- KR-B1- 100 909 711
- US-A1- 2005 174 335
- US-A1- 2007 164 986
- US-A1- 2009 042 619
- US-A1- 2010 268 426

## Beschreibung

Die Erfindung betrifft eine Bedienvorrichtung zum Bedienen zumindest eines Funktionsgeräts eines Kraftfahrzeugs, mit einem Bildschirm, der eine berührungssensitive Oberfläche aufweist, und mit einer elektronischen Steuereinrichtung zur Ansteuerung des Bildschirms, die dazu ausgelegt ist, eine Mehrzahl von grafischen Symbolen, die unterschiedlichen Bedienfunktionen des Funktionsgeräts zugeordnet sind, auf dem Bildschirm anzuzeigen und nach Empfangen einer Eingabe, die ein Benutzer zum Auswählen eines der angezeigten Symbole durch Berühren der berührungssensitiven Oberfläche vornimmt, Steuersignale zum Durchführen der dem ausgewählten Symbol zugeordneten Bedienfunktion an das Funktionsgerät abzugeben. Die Erfindung betrifft außerdem ein Lenkrad für ein Kraftfahrzeug, ein Kraftfahrzeug sowie entsprechendes Verfahren.

Das Interesse richtet sich vorliegend vorzugsweise auf eine Bedienvorrichtung, welche speziell zur Installation an einem Lenkrad eines Kraftfahrzeugs konzipiert ist. Solche Bedienvorrichtungen sind aus dem Stand der Technik bereits in vielfältiger Ausgestaltung bekannt. In diesem Zusammenhang ist es beispielsweise bereits bekannt, mechanische Druckschalter oder Drehschalter an einem Lenkrad anzubringen, mittels denen beispielsweise der Bordcomputer des Kraftfahrzeugs, eine Telefonanlage, eine Audioanlage sowie weitere Funktionsgeräte des Kraftfahrzeugs bedient werden können. Im Stand der Technik muss jedoch ein gewisser Kompromiss zwischen der Übersichtlichkeit der Bedienelemente einerseits und der Anzahl der zu bedienenden Funktionsgeräte des Kraftfahrzeugs andererseits getroffen werden. Bei einer Vielzahl von Bedienelementen verliert der Fahrer recht schnell den Überblick und lässt sich somit relativ einfach von der aktuellen Straßensituation ablenken. Bei manchen Bedienvorrichtungen, die relativ komplex aufgebaut sind, muss der Fahrer für die Betätigung der verschiedenen Bedienelemente sogar seine Hände von dem Lenkrad nehmen. Würde andererseits die Anzahl der Bedienelemente im Stand der Technik reduziert werden, so wäre die Anzahl der Funktionsgeräte reduziert, die mittels der am Lenkrad angebrachten Bedienelemente gesteuert werden können. In diesem Falle müsste der Fahrer gegebenenfalls Bedienelemente betätigen, die an einer Mittelkonsole angebracht sind. Auch dies führt zu einer Ablenkung des Fahrers. Eine besondere Herausforderung besteht somit darin, zu gewährleisten, dass der Fahrer mittels der Bedienvorrichtung eine Vielzahl von verschiedenen Funktionen bedienen kann, die Bedienvorrichtung selbst jedoch sehr übersichtlich und benutzerfreundlich konzipiert ist, so dass sie zu keiner Ablenkung von der aktuellen Straßensituation führt.

Die WO 2011/062583 A1 beschreibt die Verwendung von flexiblen Displays innerhalb eines Fahrzeuges zur Ausgabe von Entertainment Inhalten, Warnungen oder allgemeinen Informationen. Das Display ist derart ausgestaltet, dass es an Innenverkleidungsteilen angebracht werden kann. Darüber hinaus kann das Display aufgerollt werden, um in eine Verstauposition verbracht zu werden.

Die US 2010/0268426 A1 offenbart ein konfigurierbares Eingabesystem für ein Kraftfahrzeug. Das konfigurierbare Eingabesystem weist eine berührungsempfindliche Eingabeoberfläche sowie einen Touchscreen auf. Der Benutzer kann frei konfigurieren, welche Funktionen auf dem Touchscreen dem Touchpad zugeordnet werden sollen.

Aus der DE 10 2010 012 240 A1 ist eine Bedien- und Anzeigevorrichtung für ein Kraftfahrzeug bekannt, welche wenigstens zwei Bedieneinrichtungen aufweist, wobei jeder Bedieneinrichtung jeweils eine Gruppe von Bedienfunktionen zugeordnet werden kann und die Funktionsgruppen auf einer Anzeigeeinrichtung dargestellt werden können. Für die Darstellung der Funktionsgruppen ist ein gemeinsamer Anzeigebereich auf der Anzeigeeinrichtung vorgesehen. Bei Annäherung des Fingers an eine der Bedieneinrichtungen werden in dem gemeinsamen Anzeigebereich im Wesentlichen ausschließlich die Bedienfunktionen angezeigt, die dieser Bedieneinrichtung zugeordnet sind. An diesem Stand der Technik ist als nachteilig der Umstand anzusehen, dass die aktuelle Tastenbelegung bzw. die aktuell zugewiesenen Bedienfunktionen der Bedieneinrichtungen ausschließlich auf der separaten Anzeigeeinrichtung im Kombiinstrument symbolisiert werden, nicht jedoch an den Tasten selbst. Der Fahrer muss somit einerseits die Tasten am Lenkrad und andererseits gleichzeitig auch die Anzeigeeinrichtung im Kombiinstrument betrachten, um die Bedieneinrichtungen bedienen zu können.

Die Anzahl der möglichen Bedienfunktionen, welche mittels der Bedienvorrichtung durchgeführt werden können, kann grundsätzlich durch den Einsatz eines Touchdisplays erhöht werden, d.h. eines Bildschirms mit einer berührungssensitiven Oberfläche. Eine solche Lösung ist beispielsweise aus dem Dokument EP 0 302 193 A1 bekannt. Die bekannten berührungssensitiven Bildschirme, wie sie bei Lenkrädern eingesetzt werden, sind jedoch mit Nachteilen verbunden. Die Touchdisplays beanspruchten nämlich relativ viel Bauraum, welcher im Lenkrad bekanntlich nicht zur Verfügung steht, weil in das Lenkrad auch andere elektronische Einrichtungen integriert werden müssen, wie beispielsweise ein Airbag, eine Lenkradheizung oder dergleichen. Die üblicherweise eingesetzten Touchdisplays haben außerdem den entscheidenden Nachteil, dass sie einen relativ hohen Stromverbrauch aufweisen, was sich insbesondere bei einem abgestellten Fahrzeug bzw. bei einer deaktivierten Antriebsmaschine als nachteilig erweist. In diesem Falle wird elektrische Energie lediglich von einem Energiespeicher bereitgestellt, der jedoch eine begrenzte Kapazität aufweist.

Es ist Aufgabe der Erfindung, eine gegenüber dem Stand der Technik verbesserte Bedienvorrichtung, ein Lenkrad, ein Kraftfahrzeug sowie ein entsprechendes Verfahren bereitzustellen.

Diese Aufgabe wird erfindungsgemäß durch eine Bedienvorrichtung, durch ein Lenkrad, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Bedienvorrichtung ist zur Installation in einem Kraftfahrzeug, beispielsweise an einem Lenkrad, vorgesehen und dient zum Bedienen zumindest eines Funktionsgeräts des Kraftfahrzeugs. Die Bedienvorrichtung umfasst einen Bildschirm mit einer berührungssensitiven Oberfläche sowie eine Steuereinrichtung zur Ansteuerung des Bildschirms. Die Steuereinrichtung kann den Bildschirm zum Anzeigen einer Mehrzahl von vorgegebenen grafischen Symbolen ansteuern, die unterschiedlichen Bedienfunktionen des Funktionsgeräts zugeordnet und beispielsweise in einem Speicher der Steuereinrichtung abgelegt sind. Die Steuereinrichtung kann auch eine Eingabe empfangen, die ein Benutzer zum Auswählen eines der angezeigten Symbole durch Berühren der berührungssensitiven Oberfläche vornimmt. Nach Empfangen dieser Eingabe kann die Steuereinrichtung Steuersignale ausgeben, aufgrund derer die dem ausgewählten Symbol zugeordnete Bedienfunktion durchgeführt wird. Erfindungsgemäß ist der Bildschirm als elektronisches Papier bzw. als elektronisches Papier-Display ausgebildet.

Ein vorteilhafter Effekt wird durch die Ausgestaltung des Bildschirms als elektronisches Papier bzw. so genanntes "E-Papier" erzielt. Ein derartiger Bildschirm ist vorzugsweise ein passives bzw. nichtleuchtendes Display, welches über keine eigene Lichtquelle verfügt und lediglich das Umgebungslicht - ähnlich wie ein normales Papier - reflektiert. Ein elektronisches Papier wird daher auch als "reflektives Display" bezeichnet. Die erfindungsgemäße Bedienvorrichtung hat insbesondere den Vorteil, dass die grafischen Symbole beispielsweise auch dauerhaft angezeigt werden können, ohne dass dafür eine elektrische Versorgungsspannung benötigt wird. Diese ist lediglich bei einem Wechsel der Anzeige erforderlich, wenn beispielsweise eine erste Gruppe von Symbolen durch eine andere zweite Gruppe von Symbolen ersetzt werden soll. Auf diesem Wege kann elektrische Energie gespart werden, und die grafischen Symbole zur Kennzeichnung der Bedienfunktionen können dennoch sehr kontrastscharf und gut wahrnehmbar dargestellt werden. Außerdem beansprucht ein elektronisches Papier relativ wenig Bauraum und kann somit besonders vorteilhaft in ein Lenkrad des Kraftfahrzeugs integriert werden. Insgesamt wird somit eine Bedienvorrichtung mit einem

Bildschirm geschaffen, welcher lediglich dann Strom verbraucht, wenn sich der anzuzeigende Inhalt ändert, und welcher eine optische Anzeige mit grafischen Symbolen bereitstellen kann, die bei Tageslicht besonders gut erkennbar bzw. wahrnehmbar sind, ohne dass eine Hintergrundbeleuchtung benötigt wird. Auf Basis eines derartigen Bildschirms lassen sich außerdem konfigurierbare Schalter bzw. Schaltflächen realisieren, deren Kennzeichnung bzw. Symbole je nach Anwendung angepasst werden können. Auf diese Art und Weise kann eine Bedienvorrichtung geschaffen werden, mittels welcher einerseits eine Vielzahl von verschiedenen Bedienfunktionen bedient werden können, die andererseits jedoch sehr übersichtlich und benutzerfreundlich sowie außerdem bauraum- und energiesparend konzipiert ist und des Weiteren eine besonders intuitive Bedienung ermöglicht. Hierdurch wird wiederum erreicht, dass der Fahrer beim Bedienen der Bedienvorrichtung nicht von der aktuellen Straßensituation abgelenkt wird.

Also werden mittels des Bildschirms grafische Symbole dargestellt, die jeweils eine vorbestimmte Bedienfunktion kennzeichnen. Unter einem grafischen Symbol wird vorliegend im Allgemeinen ein Zeichen verstanden, d.h. eine Kennzeichnung der zugewiesenen Bedienfunktion. Ein Zeichen kann dabei beispielsweise ein Wortzeichen, ein einzelner Buchstabe, ein Bildzeichen und/oder ein Wort-Bild-Zeichen sein.

Unter einem Funktionsgerät des Kraftfahrzeugs wird vorliegend eine funktionelle elektronische Einrichtung verstanden, die den Fahrer beispielsweise bei Führen des Kraftfahrzeugs unterstützt und/oder die Fahrzeuginsassen unterhält. Ein Funktionsgerät kann beispielsweise ein Bordcomputer, eine Telefonanlage, ein Geschwindigkeitsregelungssystem (Tempomat), ein Radio, eine Audioanlage oder ein Navigationssystem sein.

Die berührungssensitive Oberfläche des Bildschirms ist bevorzugt in mehrere Schaltflächen unterteilt, denen jeweils ein separates grafisches Symbol oder mehrere Symbole zugeordnet werden kann/können.

Die Erfassung der Berührung der berührungssensitiven Oberfläche kann beispielsweise mit Hilfe einer kapazitiven Sensoreinrichtung realisiert werden. Der Bildschirm kann dabei in mehrere Schaltflächen unterteilt sein, wobei jeder Schaltfläche ein oder mehrere Sensorelemente zugeordnet werden können, welche zum Erfassen der Berührung der jeweiligen Schaltfläche dienen. Somit kann eine Schaltinsel mit einer vorgegebenen Anzahl von Schaltflächen realisiert werden, welche mit jeweiligen grafischen Symbolen gekennzeichnet werden können.

Bevorzugt ist der Bildschirm bzw. das elektronische Papier als elektrophoretisches Display ausgebildet, bei welchem das Prinzip der Elektrophorese verwendet wird. Ein derartiges Display weist kleine Mikrokapseln auf, die beispielsweise positiv geladene weiße Partikel und negativ geladene schwarze Partikel oder umgekehrt enthalten. Die Darstellung wird durch kurzzeitiges Anlegen einer elektrischen Spannung verändert und bleibt dann stabil, ohne dass die Versorgung mit elektrischer Spannung aufrechterhalten zu werden braucht.

Es erweist sich als vorteilhaft, wenn die Bedienvorrichtung eine außerhalb des Bildschirms angeordnete Leuchteinrichtung, insbesondere mit zumindest einer LED, aufweist, welche zum Beleuchten der berührungssensitiven Oberfläche bzw. des Bildschirms dient. Mit wenigen Leuchtdioden - beispielsweise auch mit einer einzigen LED - lässt sich dabei die gesamte Fläche des Bildschirms beleuchten, so dass die grafischen Symbole auch bei Dunkelheit bzw. bei Nacht gut erkannt werden können. Eine solche LED verbraucht dabei deutlich weniger elektrische Energie als beispielsweise ein LCD-Display.

Der Benutzer kann die Bedienvorrichtung auch selbst konfigurieren: Die Bedienvorrichtung kann zum Bedienen von zumindest zwei verschiedenen Funktionsgeräten des Kraftfahrzeugs ausgebildet sein. Mit Hilfe des Bildschirms können also - insbesondere wahlweise - zumindest zwei verschiedene Funktionsgeräte des Kraftfahrzeugs bedient werden. Wird ein erstes Funktionsgerät - beispielsweise ein Bordcomputer des Kraftfahrzeugs - bedient, so kann die Steuereinrichtung eine erste Gruppe von grafischen Symbolen auf dem Bildschirm anzeigen, die unterschiedlichen Bedienfunktionen des ersten Funktionsgeräts zugeordnet sind und jeweils eine Schaltfläche des Bildschirms kennzeichnen. Wird ein zweites elektronisches Funktionsgerät des Kraftfahrzeugs - beispielsweise eine Telefonanlage oder ein Radio - bedient, so kann anstelle der ersten Gruppe von grafischen Symbolen eine zweite Gruppe von Symbolen angezeigt werden, die unterschiedlichen Bedienfunktionen des zweiten Funktionsgeräts zugeordnet sind. Mit anderen Worten kann die Steuereinrichtung dazu ausgelegt sein, auf dem Bildschirm wahlweise die erste Gruppe von Symbolen, die unterschiedlichen Bedienfunktionen des ersten Funktionsgeräts zugeordnet sind, oder die zweite Gruppe von grafischen Symbolen anzuzeigen, die unterschiedlichen Bedienfunktionen des zweiten Funktionsgeräts zugeordnet sind. Mit einem einzigen Bildschirm bzw. Touchdisplay können somit wahlweise mehrere Funktionsgeräte des Kraftfahrzeugs gesteuert werden, ohne dass die Anzeige auf dem Bildschirm unübersichtlich wird. Der Bildschirm selbst kann somit verhältnismäßig klein ausgeführt werden, und seine Größe kann beispielsweise der Größe von bekannten Schaltinseln entsprechen, die bereits im Stand der Technik bei Lenkrädern eingesetzt werden.

Bevorzugt kann der Wechsel der Tastenbelegung bzw. der Wechsel zwischen den unterschiedlichen Gruppen von Symbolen durch den Benutzer selbst vorgenommen werden, indem beispielsweise eine vorgegebene Gestenbewegung an der berührungssensitiven Oberfläche gemäß einem vorbestimmten (ersten) Muster durchgeführt wird. Die Steuereinrichtung kann also derart eingerichtet sein, dass sie eine Eingabe, die der Benutzer durch Berühren des Bildschirms vornimmt, einer Mustererkennung hinsichtlich des vorbestimmten weiteren Musters unterzieht und nach Erkennen des weiteren Musters einen Wechsel zwischen den Gruppen durchführt. Somit kann der Benutzer auf sehr einfache und intuitive Art und Weise zwischen unterschiedlichen Funktionsgeräten des Kraftfahrzeugs umschalten, die mittels des Bildschirms bedient werden sollen. Eine solche Gestenbewegung kann beispielsweise eine "Wischbewegung" an der berührungssensitiven Oberfläche sein.

Erfindungsgemäß ist vorgesehen, dass die Bedienvorrichtung einen von dem ersten Bildschirm separaten zweiten Bildschirm umfasst, der beispielsweise beabstandet zum ersten Bildschirm angeordnet sein kann. Wird die Bedienvorrichtung beispielsweise in ein Lenkrad integriert, so kann der erste Bildschirm an einer ersten Lenkradspeiche angeordnet sein, während der zweite Bildschirm an einer zweiten Lenkradspeiche angeordnet sein kann. Wird eine vorbestimmte Gruppe von grafischen Symbolen, die unterschiedlichen Bedienfunktionen des zumindest einen Funktionsgeräts zugeordnet sind, auf dem ersten Bildschirm angezeigt, so kann der Benutzer durch eine vorgegebene Gestenbewegung an dem ersten und/oder dem zweiten Bildschirm bewirken, dass die gleiche Gruppe von Symbolen auf dem zweiten Bildschirm angezeigt wird. Mit anderen Worten kann die Steuereinrichtung eine Eingabe empfangen, die der Benutzer durch Berühren des ersten und/oder des zweiten Bildschirms vornimmt, und die Steuereinrichtung kann diese Eingabe einer Mustererkennung hinsichtlich eines vorbestimmten Musters unterziehen. Nach Erkennen des Musters in der Eingabe wird dann die gleiche Gruppe von Symbolen auf dem zweiten Bildschirm angezeigt. Auf diese Art und Weise kann der Benutzer eine bestimmte Tastenbelegung von dem einen Bildschirm auf den anderen Bildschirm und/oder umgekehrt übertragen, indem auf einfache und intuitive Weise eine vorbestimmte Gestenbewegung an der berührungssensitiven Oberfläche des ersten und/oder des zweiten Bildschirms durchgeführt wird. Das Muster kann beispielsweise beinhalten, dass der Benutzer eine Wischbewegung an der berührungssensitiven Oberfläche des einen Bildschirms in Richtung zum anderen Bildschirm vornimmt. Wird eine solche Eingabe detektiert, so kann die Tastenbelegung des ersten Bildschirms auf den zweiten Bildschirm übertragen werden, wobei die Tastenbelegung des ersten Bildschirms entweder aufrechterhalten oder geändert werden kann. Diese Ausführungsform erweist sich insbesondere beim Einsatz der Bedienvorrichtung bei einem Lenkrad als besonders vorteilhaft. Hier kann die Tastenbelegung eines der Bildschirme beispielsweise abhängig von der Händigkeit des Fahrers auf den anderen Bildschirm übertragen werden. Außerdem kann der Fahrzeughersteller gleiche Bedienvorrichtungen sowohl für Fahrzeuge, die speziell für den Linksverkehr konzipiert sind, als auch für Fahrzeuge einsetzen, bei denen das Lenkrad auf der linken Seite angeordnet ist.

Bevorzugt ist auch der weitere Bildschirm als elektronisches Papier, insbesondere als elektrophoretisches Display, ausgebildet.

Vorzugsweise ist die Bedienvorrichtung zur Installation an einem Lenkrad des Kraftfahrzeugs vorgesehen.

Die Erfindung betrifft außerdem ein Lenkrad für ein Kraftfahrzeug, umfassend eine erfindungsgemäße Bedienvorrichtung.

Bei dem Lenkrad kann vorgesehen sein, dass der Bildschirm an einer Lenkradspeiche des Lenkrads angeordnet ist. Umfasst die Bedienvorrichtung - wie oben ausgeführt - zwei Bildschirme, so kann der eine Bildschirm an einer ersten Lenkradspeiche angeordnet sein, während der weitere Bildschirm an einer zweiten Lenkradspeiche des Lenkrads angeordnet sein kann. Bei der ersten und der zweiten Lenkradspeiche kann es sich um eine linke bzw. eine rechte Lenkradspeiche (in der Nullstellung des Lenkrads) handeln.

Die Erfindung betrifft des Weiteren ein Kraftfahrzeug, insbesondere einen Personenkraftwagen, mit einem erfindungsgemäßen Lenkrad.

Ein erfindungsgemäßes Verfahren dient zum Bedienen zumindest eines Funktionsgeräts eines Kraftfahrzeugs mittels einer Bedienvorrichtung, wobei mittels eines Bildschirms eine Vielzahl von grafischen Symbolen angezeigt wird, die unterschiedlichen Bedienfunktionen des Funktionsgeräts zugewiesen werden, und wobei eine Steuereinrichtung der Bedienvorrichtung eine Eingabe empfängt, die ein Benutzer zum Auswählen eines der angezeigten Symbole durch Berühren einer berührungssensitiven Oberfläche des Bildschirms vornimmt, und nach Empfangen der Eingabe Steuersignale zum Durchführen der ausgewählten Bedienfunktion ausgibt. Die Symbole werden mittels eines elektronischen Papiers als Bildschirm angezeigt.

Die mit Bezug auf die erfindungsgemäße Bedienvorrichtung vorgestellten bevorzugten Ausführungsformen und deren Vorteile gelten entsprechend für das erfindungsgemäße Lenkrad, für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung eine Frontseite eines Lenkrads mit einer Bedienvorrichtung gemäß einer Ausführungsform der Erfindung;
- Fig. 2a: ein Blockdiagramm der Bedienvorrichtung;
- Fig. 2b: in schematischer Darstellung eine Draufsicht auf einen Bildschirm der Bedienvorrichtung; und
- Fig. 3: ein Diagramm zur Erläuterung des Prinzips eines elektrophoretischen Displays.

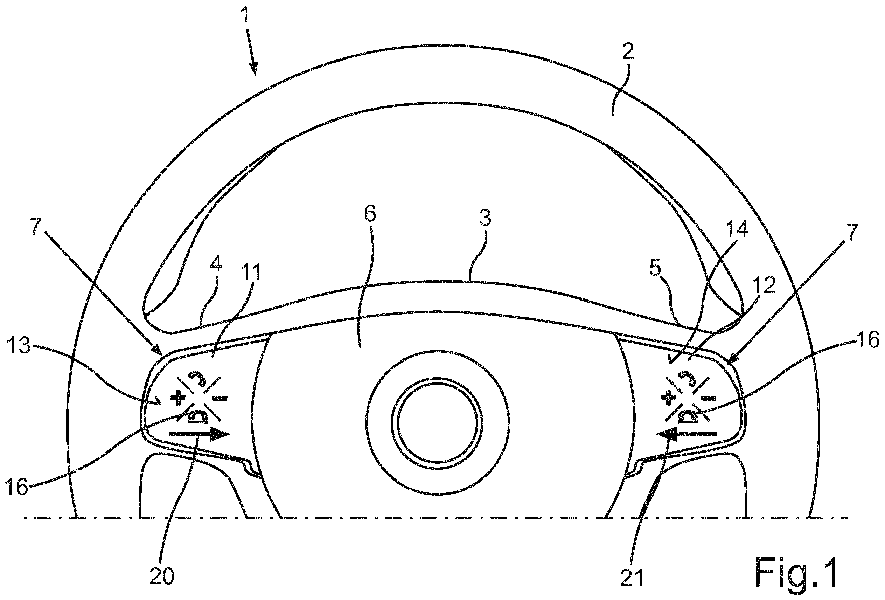

In Fig. 1 ist in schematischer Darstellung die Frontseite und somit eine dem Fahrer zugewandte Seite eines Lenkrads 1 eines Personenkraftwagens dargestellt. Das Lenkrad 1 umfasst in an sich bekannter Weise einen Lenkradkranz 2, welcher ringförmig ausgebildet ist, sowie eine Lenkradnabe 3, welche über eine erste Lenkradspeiche 4 sowie über eine zweite Lenkradspeiche 5 mit dem Lenkradkranz 2 verbunden ist. Es kann auch zumindest eine weitere Speiche (nicht dargestellt) vorgesehen sein, über welche der untere Bereich der Lenkradnabe 3 mit dem Lenkradkranz 2 verbunden ist.

An der Lenkradnabe 3 kann des Weiteren ein Deckel 6 vorgesehen sein, welcher zur Abdeckung eines Airbags dient.

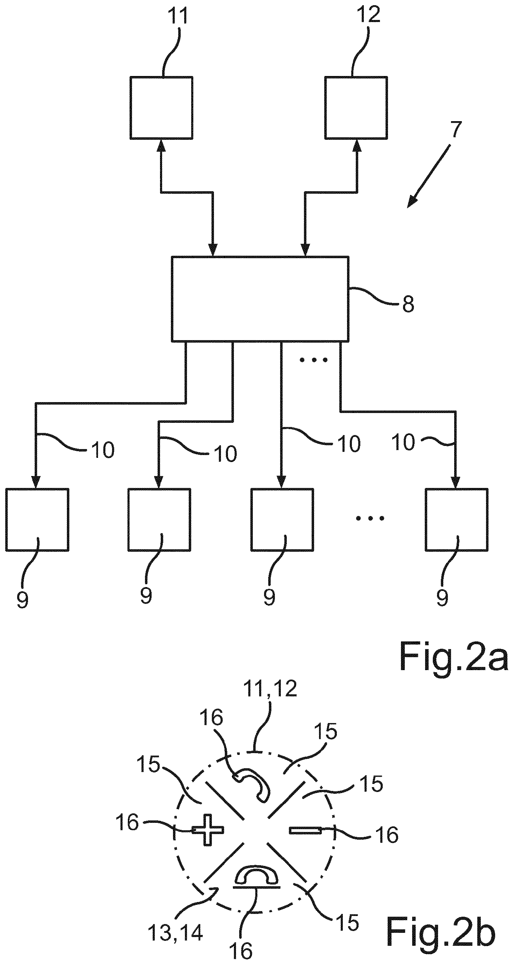

In das Lenkrad 1 ist eine Bedienvorrichtung 7 integriert, deren Blockschaltbild in Fig. 2a schematisch dargestellt ist. Bezug nehmend auf Fig. 2a umfasst die Bedienvorrichtung 7 eine elektronische Steuereinrichtung 8, welche beispielsweise einen digitalen Signalprozessor und/oder einen Mikrocontroller beinhalten kann. Die Steuereinrichtung 8 steuert mehrere Funktionsgeräte 9 des Kraftfahrzeugs an, nämlich unter Ausgabe entsprechender Steuersignale 10. Die Funktionsgeräte 9 können eines oder mehrere der folgenden Einrichtungen beinhalten: einen Bordcomputer des Kraftfahrzeugs, eine Telefonanlage, ein Radio, eine Audioanlage, ein Geschwindigkeitsregelungssystem, ein Navigationssystem und dergleichen.

Zum Bedienen der Funktionsgeräte 9 umfasst die Bedienvorrichtung 7 im Ausführungsbeispiel insgesamt zwei Bildschirme 11, 12, welche separat voneinander ausgebildet sind und außerdem als Touchdisplays mit jeweils einer berührungssensitiven Oberfläche 13 bzw. 14 (Fig. 1) ausgebildet sind. Beide Bildschirme 11, 12 haben gleiche Bauweise und sind als elektronisches Papier ausgebildet, insbesondere in Form eines elektrophoretischen Displays. Die Erfassung der Berührung kann z.B. mit Hilfe einer kapazitiven Sensoreinrichtung realisiert werden.

Bezug nehmend auf Fig. 2b, in welcher ein Bildschirm 11, 12 schematisch gezeigt ist, ist jeder Bildschirm 11, 12 jeweils in eine vorbestimmte Anzahl von berührungssensitiven und separat voneinander betätigbaren Schaltflächen 15 unterteilt. Die Berührung der Schaltflächen 15 kann jeweils mittels eines zugeordneten Sensorelements erfasst werden, welches beispielsweise an einer Rückseite des Bildschirms 11, 12 angeordnet ist. Gegebenenfalls können pro Schaltfläche 15 auch mehrere Sensoren eingesetzt werden, um eine Bewegung eines Fingers an der Bedienoberfläche 13, 14 mit einer besseren Auflösung erfassen zu können. Einfache Muster lassen sich jedoch auch mit Hilfe einer Sensoreinrichtung detektieren, welche pro Schaltfläche 15 lediglich ein einziges Sensorelement umfasst.

Bezug nehmend weiterhin auf Fig. 2b kann die Steuereinrichtung 8 auf den Bildschirmen 11, 12 jeweils grafische Symbole 16 anzeigen, welche unterschiedliche Bedienfunktionen symbolisieren bzw. kennzeichnen. In Fig. 2b ist eine erste Gruppe von Symbolen 16 gezeigt, die beispielsweise einer Telefonanlage als Funktionsgerät 9 zugeordnet sind. Durch Vornehmen einer vorgegebenen Gestenbewegung an der Oberfläche 13, 14, beispielsweise durch eine Wischbewegung von links nach rechts oder aber von rechts nach links, kann der Benutzer zwischen den Funktionsgeräten 9 wechseln und ein Gerät 9 auswählen, das mittels des Bildschirms 11, 12 zum aktuellen Zeitpunkt bedient werden soll. Wird eine solche Wischbewegung durchgeführt, so kann die erste Gruppe von Symbolen 16 beispielsweise durch eine zweite Gruppe von grafischen Symbolen 16 ersetzt werden, die einem anderen Funktionsgerät 9, z.B. einem Bordcomputer, zugeordnet sind. Dann wird mittels des Bildschirms 11, 12 nicht mehr die Telefonanlage, sondern der Bordcomputer gesteuert.

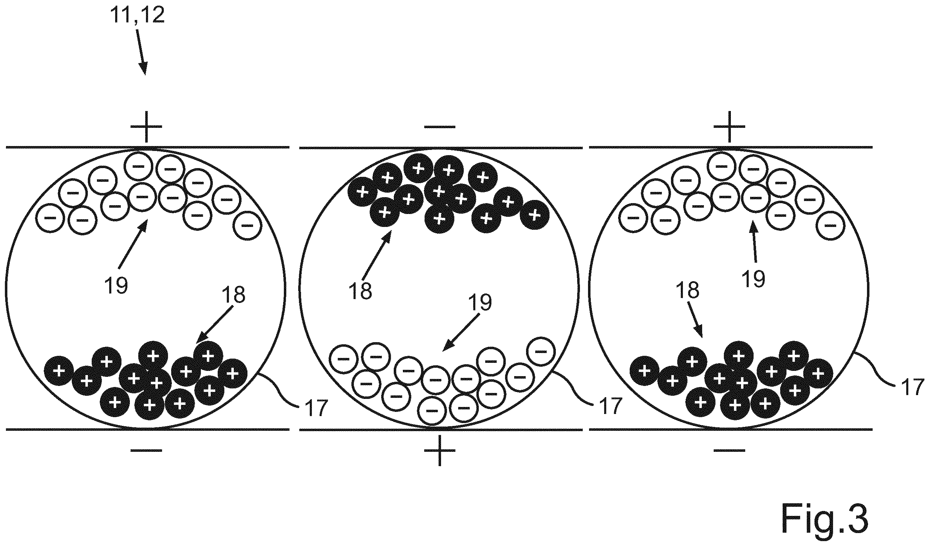

Wie bereits ausgeführt, sind die Bildschirme 11, 12 als elektronisches Papier, insbesondere als elektrophoretische Displays, ausgebildet. Bezug nehmend auf Fig. 3 kann jeder Bildschirm 11, 12 Mikrokapseln 17 aufweisen, wobei ein Pixel des Bildschirms 11, 12 durch eine oder mehrere Mikrokapseln 17 gebildet werden kann. In der Regel beinhaltet ein einzelner Bildpunkt mehrere Mikrokapseln 17. Jede Mikrokapsel 17 umfasst sowohl positiv geladene Partikel 18 (hier beispielsweise schwarz) als auch negativ geladene Partikel 19 (hier beispielsweise weiß). Durch Anlegen einer elektrischen Spannung mit der entsprechenden Polarität werden entweder die positiv oder die negativ geladenen Partikel 18, 19 sichtbar. Jede Mikrokapsel 17 ist dabei eine bistabile Kapsel, welche zwei stabile Zustände aufweist. Wird die elektrische Spannung angelegt, so bleibt der dadurch erzeugte Zustand für eine längere Zeit erhalten. Ein Wechsel des Zustands erfolgt wiederum durch erneutes Anlegen der Spannung, jedoch mit einer umgekehrten Polarität. Dadurch wird elektrische Energie ausschließlich bei einem Zustandswechsel verbraucht, nicht jedoch für die Aufrechterhaltung der grafischen Symbole 16.

Mit erneutem Bezug auf Fig. 1 ist der erste Bildschirm 11 an der linken, ersten Lenkradspeiche 4 angeordnet. Entsprechend ist der zweite Bildschirm 12 an der rechten, zweiten Lenkradspeiche 5 angeordnet. Die Anordnung an der Lenkradspeiche 4, 5 beinhaltet auch die Ausführungsform, bei welcher der jeweilige Bildschirm 11, 12 an der Abdeckung 6 angeordnet ist und sich die Abdeckung 6 seitlich über die überwiegende Länge der jeweiligen Lenkradspeiche 4, 5 erstreckt. Der linke Bildschirm 11 wird somit beispielsweise mit dem linken Daumen bedient, während die Betätigung der Oberfläche 14 des rechten Bildschirms 12 mit dem rechten Daumen erfolgt.

Weil die Bildschirme 11 und 12 passive Displays sind, welche über keine eigene Lichtquelle verfügen, sondern lediglich die Umgebungslicht reflektieren, kann optional eine externe Leuchteinrichtung eingesetzt werden, welche außerhalb der Bildschirme 11, 12 angeordnet ist. Diese Leuchteinrichtung kann für jeden Bildschirm 11, 12 jeweils mindestens eine LED umfassen, welche z.B. im Bereich des jeweiligen Bildschirms 11, 12 an dem Lenkrad 1 angeordnet ist. Durch diese Leuchteinrichtung werden die jeweiligen Symbole 16 von außen beleuchtet.

Wie bereits ausgeführt, kann bei jedem Bildschirm 11, 12 durch entsprechende Gestensteuerung bzw. durch Eingabe eines vorgegebenen Bewegungsmusters das gewünschte Funktionsgerät 9 ausgewählt werden, welches mittels dieses Bildschirms 11, 12 gesteuert werden kann. Es kann auch vorgesehen sein, dass die aktuelle Tastenbelegung eines der Bildschirme 11, 12 durch eine weitere vorgegebene Gestenbewegung bzw. ein weiteres Bewegungsmuster auf den jeweils anderen Bildschirm 11, 12 übertragen wird. Wird beispielsweise bei dem linken Bildschirm 11 eine Wischbewegung an der Oberfläche 13 in Richtung zum rechten Bildschirm 12 gemäß der Pfeildarstellung 20 vorgenommen, so werden die gleichen Symbole 16 auf dem rechten Bildschirm 12 angezeigt. Zusammen mit den Symbolen 16 werden auch die zugeordneten Bedienfunktionen übernommen. Gemäß der Pfeildarstellung 21 kann die Übertragung der Tastenbelegung auch in die andere Richtung durchgeführt werden.

Wird die Tastenbelegung beispielsweise von dem linken Bildschirm 11 auf den rechten Bildschirm 12 übernommen, so können die auf dem linken Bildschirm 11 bisher angezeigten Symbole 16 entweder aufrechterhalten werden oder es kann eine andere Gruppe von Symbolen 16 angezeigt werden, so dass ein anderes Funktionsgerät 9 mit dem linken Bildschirm 11 gesteuert werden kann.

Insgesamt kann der Benutzer somit die Tastenbelegung der Bildschirme 11, 12 frei konfigurieren bzw. die jeweils zu bedienenden Funktionsgeräte 9 des Kraftfahrzeugs selbst auswählen. Dabei ist der Stromverbrauch der Bildschirme 11, 12 auf ein Minimum reduziert, und die Bildschirme 11, 12 beanspruchen außerdem im Vergleich zu herkömmlichen Touchdisplays deutlich weniger Bauraum.

## Patentansprüche

1. Bedienvorrichtung (7) zum Bedienen zumindest eines Funktionsgeräts (9) eines Kraftfahrzeugs, mit einem Bildschirm (11, 12), welcher eine berührungssensitive Oberfläche (13, 14) aufweist, und mit einer Steuereinrichtung (8) zur Ansteuerung des Bildschirms (11, 12), wobei die Steuereinrichtung (8) dazu ausgelegt ist, eine Mehrzahl von graphischen Symbolen (16), die unterschiedlichen Bedienfunktionen des Funktionsgeräts (9) zugeordnet sind, auf dem Bildschirm (11, 12) anzuzeigen und nach Empfangen einer Eingabe, die ein Benutzer zum Auswählen eines der angezeigten Symbole (16) durch Berühren der berührungssensitiven Oberfläche (13, 14) vornimmt, Steuersignale (10) zum Durchführen der dem ausgewählten Symbol (16) zugeordneten Bedienfunktion auszugeben,
wobei der Bildschirm (11, 12) als elektronisches Papier ausgebildet ist,
**dadurch gekennzeichnet, dass**
die Bedienvorrichtung (7) einen von dem einen Bildschirm (11, 12) separaten weiteren Bildschirm (11, 12) mit einer weiteren berührungssensitiven Oberfläche (13, 14) umfasst und die Steuereinrichtung (8) dazu ausgelegt ist,
- eine vorbestimmte Gruppe von graphischen Symbolen (16), die unterschiedlichen Bedienfunktionen des zumindest einen Funktionsgeräts (9) zugeordnet sind, auf dem einen Bildschirm (11, 12) anzuzeigen,
- eine Eingabe, die der Benutzer durch Berühren des einen Bildschirms (11, 12) und/oder des weiteren Bildschirms (11, 12) vornimmt, einer Mustererkennung hinsichtlich eines vorbestimmten Musters (20, 21) zu unterziehen und
- nach Erkennen des Musters (20, 21) die gleiche Gruppe von Symbolen (16) auf dem weiteren Bildschirm (11, 12) anzuzeigen.

2. Bedienvorrichtung (7) nach Anspruch 1,
**dadurch gekennzeichnet, dass**
der Bildschirm (11, 12) als elektrophoretisches Display ausgebildet ist.

3. Bedienvorrichtung (7) nach Anspruch 1 oder 2,
**dadurch gekennzeichnet, dass**
die Bedienvorrichtung (7) eine außerhalb des Bildschirms (11, 12) angeordnete Leuchteinrichtung, insbesondere mit zumindest einer LED, zum Beleuchten der berührungssensitiven Oberfläche (13, 14) aufweist.

4. Bedienvorrichtung (7) nach einem der vorhergehenden Ansprüche,
**dadurch gekennzeichnet, dass**
die Bedienvorrichtung (7) zum Bedienen von zumindest zwei verschiedenen Funktionsgeräten (9) des Kraftfahrzeugs ausgebildet ist und die Steuereinrichtung (8) dazu ausgelegt ist, auf dem Bildschirm (11, 12) wahlweise eine erste Gruppe von graphischen Symbolen (16), die unterschiedlichen Bedienfunktionen eines ersten der Funktionsgeräte (9) zugeordnet sind, oder eine zweite Gruppe von graphischen Symbolen (16) anzuzeigen, die unterschiedlichen Bedienfunktionen eines zweiten der Funktionsgeräte (9) zugeordnet sind.

5. Bedienvorrichtung (7) nach Anspruch 4,
**dadurch gekennzeichnet, dass**
die Steuereinrichtung (8) dazu ausgelegt ist, eine Eingabe, die der Benutzer durch Berühren des Bildschirms (11, 12) vornimmt, einer Mustererkennung hinsichtlich eines vorbestimmten weiteren Musters zu unterziehen und nach Erkennen des vorbestimmten weiteren Musters einen Wechsel zwischen den Gruppen durchzuführen.

6. Bedienvorrichtung (7) nach Anspruch 5,
**dadurch gekennzeichnet, dass**
der weitere Bildschirm (11, 12) als elektronisches Papier, insbesondere als elektrophoretisches Display, ausgebildet ist.

7. Bedienvorrichtung (7) nach einem der vorhergehenden Ansprüche,
**dadurch gekennzeichnet, dass**
die Bedienvorrichtung (7) zur Installation an einem Lenkrad (1) des Kraftfahrzeugs ausgebildet ist.

8. Lenkrad (1) für ein Kraftfahrzeug, mit einer Bedienvorrichtung (7) nach einem der vorhergehenden Ansprüche.

9. Lenkrad (1) nach Anspruch 8,
**dadurch gekennzeichnet, dass**
der Bildschirm (11, 12) an einer Lenkradspeiche (4, 5) des Lenkrads (1) angeordnet ist.

10. Lenkrad (1) nach Anspruch 10,
**dadurch gekennzeichnet, dass**
der eine Bildschirm (11, 12) an einer ersten Lenkradspeiche (4, 5) des Lenkrads (1) und der weitere Bildschirm (11, 12) an einer zweiten Lenkradspeiche (4, 5) des Lenkrads (1) angeordnet sind.

11. Kraftfahrzeug mit einem Lenkrad (1) nach einem der Ansprüche 9 bis 10.

12. Verfahren zum Bedienen zumindest eines Funktionsgeräts (9) eines Kraftfahrzeugs mittels einer Bedienvorrichtung (7), wobei mittels eines Bildschirms (11, 12) der Bedienvorrichtung (7) eine Mehrzahl von graphischen Symbolen (16) angezeigt werden, die unterschiedlichen Bedienfunktionen des Funktionsgeräts (9) zugeordnet sind, und wobei eine Steuereinrichtung (8) eine Eingabe empfängt, die ein Benutzer zum Auswählen eines der angezeigten Symbole (16) durch Berühren einer berührungssensitiven Oberfläche (13, 14) des Bildschirms (11, 12) vornimmt, und nach Empfangen der Eingabe Steuersignale (10) zum Durchführen der dem ausgewählten Symbol (16) zugeordneten Bedienfunktion ausgibt,
die Symbole (16) mittels eines elektronischen Papiers als Bildschirm (11, 12) angezeigt werden,
**dadurch gekennzeichnet, dass**
die Bedienvorrichtung (7) einen von dem einen Bildschirm (11, 12) separaten weiteren Bildschirm (11, 12) mit einer weiteren berührungssensitiven Oberfläche (13, 14) umfasst und mittels der Steuereinrichtung (8)
- eine vorbestimmte Gruppe von graphischen Symbolen (16), die unterschiedlichen Bedienfunktionen des zumindest einen Funktionsgeräts (9) zugeordnet sind, auf dem einen Bildschirm (11, 12) angezeigt werden,
- eine Eingabe, die der Benutzer durch Berühren des einen Bildschirms (11, 12) und/oder des weiteren Bildschirms (11, 12) vornimmt, einer Mustererkennung hinsichtlich eines vorbestimmten Musters (20, 21) unterzogen wird und
- nach Erkennen des Musters (20, 21) die gleiche Gruppe von Symbolen (16) auf dem weiteren Bildschirm (11, 12) angezeigt wird.

## Claims

1. Operator control apparatus (7) for the operator control of at least one functional device (9) of a motor vehicle, having a screen (11, 12) that has a touch-sensitive surface (13, 14) and having a control device (8) for actuation of the screen (11, 12), wherein the control device (8) is designed to display a plurality of graphical symbols (16), which are associated with different operator control functions of the functional device (9), on the screen (11, 12) and, after reception of an input that a user makes to select one of the displayed symbols (16) by touching the touch-sensitive surface (13, 14), to output control signals (10) for performing the operator control function associated with the selected symbol (16),
wherein the screen (11, 12) is configured as electronic paper,
**characterized in that**
the operator control apparatus (7) comprises a further screen (11, 12), separate from the one screen (11, 12), having a further touch-sensitive surface (13, 14) and the control device (8) is designed
- to display a predetermined group of graphical symbols (16), which are associated with different operator control functions of the at least one functional device (9), on the one screen (11, 12),
- to subject an input that the user makes by touching the one screen (11, 12) and/or the further screen (11, 12) to pattern recognition for a predetermined pattern (20, 21), and,
- following recognition of the pattern (20, 21), to display the same group of symbols (16) on the further screen (11, 12).

2. Operator control apparatus (7) according to Claim 1,
**characterized in that**
the screen (11, 12) is configured as an electrophoretic display.

3. Operator control apparatus (7) according to Claim 1 or 2,
**characterized in that**
the operator control apparatus (7) has a light-emitting device, arranged outside the screen (11, 12), particularly having at least one LED, for illuminating the touch-sensitive surface (13, 14) .

4. Operator control apparatus (7) according to one of the preceding claims,
**characterized in that**
the operator control apparatus (7) is configured for the operator control of at least two different functional devices (9) of the motor vehicle and the control device (8) is designed to display on the screen (11, 12) either a first group of graphical symbols (16), which are associated with different operator control functions of a first one of the functional devices (9), or a second group of graphical symbols (16), which are associated with different operator control functions of a second one of the functional devices (9).

5. Operator control apparatus (7) according to Claim 4,
**characterized in that**
the control device (8) is designed to subject an input that the user makes by touching the screen (11, 12) to pattern recognition for a predetermined further pattern and, following recognition of the predetermined further pattern, to perform a change between the groups.

6. Operator control apparatus (7) according to Claim 5,
**characterized in that**
the further screen (11, 12) is configured as electronic paper, particularly configured as an electrophoretic display.

7. Operator control apparatus (7) according to one of the preceding claims,
**characterized in that**
the operator control apparatus (7) is configured for installation on a steering wheel (1) of the motor vehicle.

8. Steering wheel (1) for a motor vehicle, having an operator control apparatus (7) according to one of the preceding claims.

9. Steering wheel (1) according to Claim 8,
**characterized in that**
the screen (11, 12) is arranged on a steering wheel spoke (4, 5) of the steering wheel (1).

10. Steering wheel (1) according to Claim 10,
**characterized in that**
the one screen (11, 12) is arranged on a first steering wheel spoke (4, 5) of the steering wheel (1) and the further screen (11, 12) is arranged on a second steering wheel spoke (4, 5) of the steering wheel (1).

11. Motor vehicle having a steering wheel (1) according to either of Claims 9 and 10.

12. Method for the operator control of at least one functional device (9) of a motor vehicle by means of an operator control apparatus (7), wherein a screen (11, 12) of the operator control apparatus (7) is used to display a plurality of graphical symbols (16) that are associated with different operator control functions of the functional device (9), and wherein a control device (8) receives an input that a user makes to select one of the displayed symbols (16) by touching a touch-sensitive surface (13, 14) of the screen (11, 12), and, following reception of the input, outputs control signals (10) for performing the operator control function associated with the selected symbol (16),
wherein the symbols (16) are displayed by means of an electronic paper as a screen (11, 12), **characterized in that**
the operator control apparatus (7) comprises a further screen (11, 12), separate from the one screen (11, 12), having a further touch-sensitive surface (13, 14) and the control device (8) is used
- to display a predetermined group of graphical symbols (16), which are associated with different operator control functions of the at least one functional device (9), on the one screen (11, 12),
- to subject an input that the user makes by touching the one screen (11, 12) and/or the further screen (11, 12) to pattern recognition for a predetermined pattern (20, 21), and,
- following recognition of the pattern (20, 21), to display the same group of symbols (16) on the further screen (11, 12).

## Revendications

1. Dispositif d'actionnement (7) destiné à actionner au moins un appareil fonctionnel (9) d'un véhicule automobile, comportant un écran d'affichage (11, 12) présentant une surface tactile (13, 14), et comportant un dispositif de commande (8) destiné à commander l'écran (11, 12), dans lequel le dispositif de commande (8) est adapté pour afficher sur l'écran (11, 12) une pluralité de symboles graphiques (16) associés à diverses fonctions d'actionnement de l'appareil fonctionnel (9) et, après réception d'une entrée qu'un utilisateur effectue pour sélectionner l'un des symboles (16) affichés en appuyant sur la surface tactile (13, 14), pour délivrer des signaux de commande (10) afin d'exécuter la fonction d'actionnement associée au symbole sélectionné (16), dans lequel l'écran (11, 12) est réalisé sous la forme de papier électronique,
**caractérisé en ce que** le dispositif d'actionnement (7) comprend un autre écran (11, 12) séparé dudit écran (11, 12) et présentant une autre surface tactile (13, 14) et dans lequel le dispositif de commande (8) est adapté
- pour afficher sur ledit un écran (11, 12) un groupe prédéterminé de symboles graphiques (16) associés à diverses fonctions d'actionnement de l'au moins un appareil fonctionnel (9),
- pour soumettre une entrée effectuée par l'utilisateur, en appuyant sur ledit écran (11, 12) et/ou sur l'autre écran (11, 12), à une reconnaissance de motif en ce qui concerne un motif prédéterminé (20, 21), et
- après reconnaissance du motif (20, 21), pour afficher le même groupe de symboles (16) sur l'autre écran (11, 12) .

2. Dispositif d'actionnement (7) selon la revendication 1,
**caractérisé en ce que** l'écran (11, 12) est réalisé sous la forme d'un afficheur électrophorétique.

3. Dispositif d'actionnement (7) selon la revendication 1 ou 2,
**caractérisé en ce que** le dispositif d'actionnement (7) comporte un dispositif d'éclairage disposé à l'extérieur de l'écran (11, 12), en particulier muni d'au moins une LED, pour éclairer la surface tactile (13, 14) .

4. Dispositif d'actionnement (7) selon l'une des revendications précédentes,
**caractérisé en ce que** le dispositif d'actionnement (7) est conçu pour actionner au moins deux appareils fonctionnels (9) différents du véhicule automobile, et **en ce que** le dispositif de commande (8) est adapté pour afficher sélectivement sur l'écran (11, 12) un premier groupe de symboles graphiques (16) associés à diverses fonctions d'actionnement d'un premier des appareils fonctionnels (9), ou un second groupe de symboles graphiques (16) associés à diverses fonctions d'actionnement d'un second des appareils fonctionnels (9) .

5. Dispositif d'actionnement (7) selon la revendication 4,
**caractérisé en ce que** le dispositif de commande (8) est adapté pour soumettre une entrée que l'utilisateur effectue en touchant l'écran (11, 12) à une reconnaissance de motif en ce qui concerne un autre motif prédéterminé et pour effectuer un basculement entre les groupes après reconnaissance de l'autre motif prédéterminé.

6. Dispositif d'actionnement (7) selon la revendication 5,
**caractérisé en ce que** l'autre écran (11, 12) est réalisé sous la forme de papier électronique, en particulier sous la forme d'un afficheur électrophorétique.

7. Dispositif d'actionnement (7) selon l'une des revendications précédentes,
**caractérisé en ce que** le dispositif d'actionnement (7) est conçu pour une installation sur un volant de direction (1) du véhicule automobile.

8. Volant de direction (1) pour véhicule automobile, comportant un dispositif d'actionnement (7) selon l'une des revendications précédentes.

9. Volant de direction (1) selon la revendication 8,
**caractérisé en ce que** l'écran (11, 12) est disposé sur un rayon de volant (4, 5) du volant de direction (1).

10. Volant de direction (1) selon la revendication 10,
**caractérisé en ce qu'**un écran (11, 12) est disposé sur un premier rayon de volant (4, 5) du volant de direction (1) et **en ce que** l'autre écran (11, 12) est disposé sur un second rayon de volant (4, 5) du volant de direction (1).

11. Véhicule automobile muni d'un volant de direction (1) selon l'une des revendications 9 à 10.

12. Procédé pour actionner au moins un appareil fonctionnel (9) d'un véhicule automobile au moyen d'un dispositif d'actionnement (7), dans lequel une pluralité de symboles graphiques (16) associés à diverses fonctions d'actionnement de l'appareil fonctionnel (9) sont affichés au moyen d'un écran (11, 12) du dispositif d'actionnement (7), et dans lequel un dispositif de commande (8) reçoit une entrée qu'un utilisateur effectue pour sélectionner l'un des symboles affichés (16) en touchant une surface tactile (13, 14) de l'écran (11, 12) et, après réception de l'entrée, délivre des signaux de commande (10) pour exécuter la fonction d'actionnement associée au symbole (16) sélectionné,
les symboles (16) étant affichés au moyen d'un papier électronique en tant qu'écran (11, 12),
**caractérisé en ce que** le dispositif d'actionnement (7) comprend un autre écran (11, 12) séparé dudit écran (11, 12) et présentant une autre surface tactile (13, 14) et, au moyen du dispositif de commande (8),
- un groupe prédéterminé de symboles graphiques (16) associés à diverses fonctions d'actionnement de l'au moins un appareil fonctionnel (9) est affiché sur ledit écran (11, 12),
- une entrée effectuée par l'utilisateur en touchant un écran (11, 12) et/ou l'autre écran (11, 12) est soumise à une reconnaissance de motif en ce qui concerne un motif prédéterminé (20, 21), et
après reconnaissance du motif (20, 21), le même groupe de symboles (16) est affiché sur l'autre écran (11, 12) .
